# EUROPÄISCHE PATENTANMELDUNG

(11) **EP 0 981 069 A1**
(43) Veröffentlichungstag der Anmeldung: **23.02.2000**
(21) Anmeldenummer: 99115417.0
(22) Anmeldetag: 04.08.1999
(51) Int. Cl.: G02F 1/361

(54) **Nichtlinear-optisch aktive Copolymere**

(30) Priorität: 17.08.1998 DE 19837252
(71) Anmelder: SIEMENS AKTIENGESELLSCHAFT, 80333 München (DE)
(72) Erfinder: Kanitz, Andreas, Dr., 91333 Höchstadt (DE); Fricke, Christian, Dr., 14050 Berlin (DE)

(57) **Zusammenfassung**

Die nichtlinear-optisch aktiven Copolymere nach der Erfindung sind Polyaddukte aus mindestens einem organischen Di- oder Polycyanat und einer nichtlinear-optisch aktiven Verbindung, d.h. einem Chromophor.

## Beschreibung

Die Erfindung betrifft nichtlinear-optisch aktive Copolymere sowie elektrooptische und photonische Bauelemente mit derartigen Copolymeren.

Polymere mit nichtlinear-optischen Eigenschaften (NLO-Polymere) sind aus dem Stand der Technik bekannt. Derartige Materialien werden beispielsweise als elektrooptische Schalter eingesetzt und finden Anwendung in Bereichen der Informationsverarbeitung und der integrierten Optik, wie optische Chip-to-chip-Verbindungen, Waveguiding in elektrooptischen Schichten, Mach-Zehnder-Interferometer und die optische Signalverarbeitung in der Sensorik.

Ein Überblick über die aktuellen Probleme bei der Entwicklung von Materialien mit ausgeprägten nichtlinear-optischen Eigenschaften findet sich in 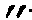 Angewandte Chemie", Bd. 107 (1995), Seiten 167 bis 187. Neben den Erfordernissen, die an die nichtlinear-optischen Chromophore gestellt werden müssen, wird dabei auch auf die Probleme bei der Entwicklung polymerer Matrizen für die Einbettung der Chromophore und ihre orientierungsstabile Ausrichtung hingewiesen.

Damit Polymere, die mit kovalent gebundenen oder gelösten nichtlinear-optischen Chromophoren versehen sind, nichtlinear-optisch aktiv werden und eine hohe Suszeptibilität 2. Ordnung aufweisen, müssen die Chromophore im elektrischen Feld orientiert werden (siehe dazu: J.D. Swalen et al. in J. Messier, F. Kajzar, P. Prasad 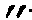 Organic Molecules for Nonlinear Optics and Photonics", Kluwer Academic Publishers, Dordrecht, 1991, Seiten 433 bis 445). Die Orientierung erfolgt üblicherweise im Bereich der Glasübergangstemperatur, wo die Beweglichkeit der Kettensegmente der Polymeren eine Orientierung der nichtlinear-optischen Chromophore ermöglicht. Die im Feld erzielte Orientierung wird dann durch Abkühlen oder besser durch Vernetzen des Polymers eingefroren.

Die dabei erreichbare Suszeptibilität 2. Ordnung χ⁽²⁾ ist proportional zur räumlichen Dichte der Hyperpolarisierbarkeit β, zum Grundzustandsdipolmoment µ₀ der Chromophore, zum elektrischen Polungsfeld und zu Parametern, welche die Orientierungsverteilung nach dem Polungsprozeß beschreiben (siehe dazu: K.D. Singer et al. in P.N. Prasad, D.R. Ulrich "Nonlinear Optical and Electroactive Polymers", Plenum Press, New York, 1988, Seiten 189 bis 204).

Von großem Interesse sind Verbindungen mit einem hohen Dipolmoment und gleichzeitig hohen β-Werten. Deshalb sind insbesondere Chromophore untersucht worden, die aus konjugierten π-Elektronensystemen bestehen, welche an einem Ende des Moleküls einen Elektronendonor und am anderen Ende einen Elektronenakzeptor tragen und kovalent an ein Polymer, beispielsweise an Polymethylmethacrylat (US-PS 4 915 491), Polyurethan (EP-OS 0 350 112) oder Polysiloxan (US-PS 4 796 976), gebunden sind.

Die bekannten Polymermaterialien mit nichtlinear-optischen Eigenschaften weisen aber den Nachteil auf, daß eine Relaxation der orientierten Chromophorbausteine eintritt und somit ein Verlust der nichtlinear-optischen Aktivität erfolgt. Diese Relaxation verhindert derzeit noch die Herstellung technisch verwertbarer, langzeitstabiler elektrooptischer Bauelemente.

Ein weiterer Nachteil der bekannten Polymermaterialien mit nichtlinear-optischen Eigenschaften ist, daß keine Modifizierung hinsichtlich der Größe des NLO-Koeffizienten und anderer wichtiger Parameter, wie Brechungsindex und Glasübergangstemperatur, möglich ist. Auch sind die bisher beschriebenen chromophoren Systeme, bedingt durch ihre chemische Struktur, nicht ausreichend thermisch stabil, um die während der Herstellung und/oder Nutzung der elektrooptischen und photonischen Bauelemente auftretenden thermischen Belastungen ohne Schäden zu überstehen. So tritt bereits bei ca. 85°C ein merklicher Abfall der gemessenen elektrooptischen Koeffizienten durch die Relaxationsprozesse der Chromophore in der Polymermatrix auf. Wünschenswert ist aber eine Stabilität der optischen Koeffizienten bei Temperaturen oberhalb 100°C, und aus diesem Grund wird gleichzeitig eine wesentlich höhere Glasübergangstemperatur des polymeren Materials gefordert.

Aufgabe der Erfindung ist es, polymere Materialien mit stabiler nichtlinear-optischer Aktivität zu entwickeln. Insbesondere sollen Materialien zur Verfügung gestellt werden, bei denen eine Relaxation der Chromophore bis zu Temperaturen oberhalb 100°C verhindert wird und deren chromophore Bestandteile bei Temperaturen von mehr als 200°C über einen langen Zeitraum thermisch-oxidativ stabil sind.

Dies wird erfindungsgemäß mit nichtlinear-optisch aktiven Copolymeren erreicht, die ein Polyaddukt sind aus
(a) mindestens einem organischen Di- oder Polycyanat folgender Struktur: 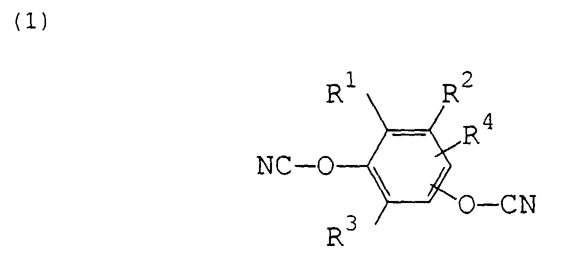 wobei folgendes gilt:
   - R¹, R², R³, R⁴ =: H, Halogen, C₁- bis C₁₀-Alkyl, C₃- bis C₆-Cycloalkyl, C₁- bis C₁₀-Alkoxy oder Phenyl, wobei die Alkyl- und Phenylgruppen ganz oder teilweise fluoriert sein können; 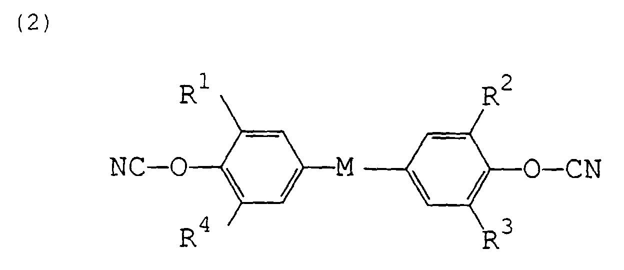
   wobei folgendes gilt:
   M ist eine chemische Bindung, O, S, SO₂, CF₂, CH₂, CH(CH₃), Isopropyl, Hexafluorisopropyl, N=N, CH=CH, COO, CH=N, CH=N-N=CH, Alkylenoxyalkylen mit einem C₁- bis C₈-Alkylenrest oder ein Rest der Struktur 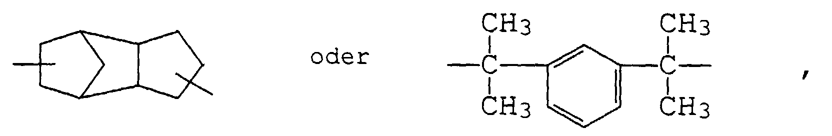
   R¹, R², R³ und R⁴ besitzen die vorstehend angegebene Bedeutung; 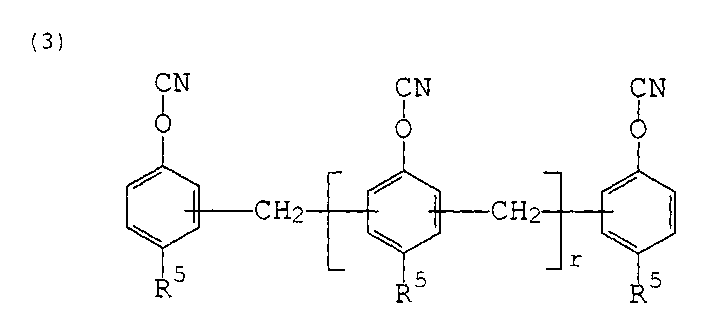 wobei folgendes gilt:
   r = 0 bis 20,
   R⁵ = H oder C₁- bis C₅-Alkyl,
   und
(b) einer nichtlinear-optisch aktiven Verbindung folgender Struktur: 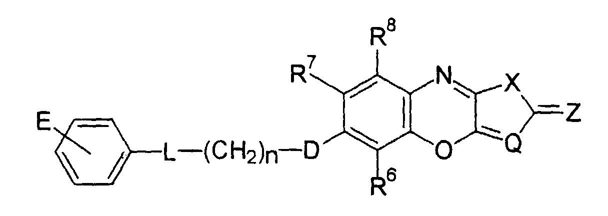 wobei folgendes gilt:
   - n =: 2 bis 6,
   - R⁶, R⁷ und R⁸: sind jeweils ein H-Atom, ein linearer oder verzweigter C₁- bis C₂₀-Alkylrest, welcher gegebenenfalls durch 1 bis 5 Sauerstoffatome in Etherfunktion unterbrochen ist, oder ein Phenyl-, Naphthyl-, Thienyl-, Thiazolyl- oder Pyridylrest,
   - D =: O, S oder NR⁹, wobei R⁹ ein H-Atom, ein linearer oder verzweigter C₁- bis C₂₀-Alkylrest, welcher gegebenenfalls durch 1 bis 5 Sauerstoffatome in Etherfunktion unterbrochen ist, ein Benzylrest oder ein Phenyl- oder Naphthylrest ist,
   - L =: O, COO oder OCO,
   - E =: OH, NH₂, OCN oder ein Rest der Struktur 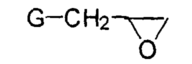 d.h. ein Glycidylrest mit der Gruppe G, mit G = O, OCO (O an CH₂) oder NR^{¹0}' wobei R¹⁰ ein H-Atom oder ein linearer C₁- bis C₆-Alkylrest ist,
   - Z: ist eine Elektronenakzeptor-substituierte Methylen- oder Iminogruppe,
   - X: steht für S, O, NR¹¹ oder eine Ringdoppelbindung oder für 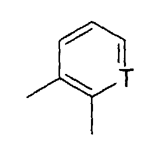 wobei R¹¹ ein H-Atom, ein linearer oder verzweigter C₁- bis C₂₀-Alkylrest oder ein Phenyl- oder Naphthylrest ist und T für CH oder N steht oder gegebenenfalls Z und T zusammen eine Struktur vom Typ =N-SO₂-C≡, =N-CS-C≡ oder =N-CO-C≡ bilden, und
   - Q: ist eine CH- oder CR¹²-Gruppe oder N, wobei R¹² ein linearer oder verzweigter C₁- bis C₂₀-Alkylrest oder ein Phenyl- oder Naphthylrest ist.

Bei bevorzugten Ausführungsformen der Erfindung bedeuten die Substituenten R¹ bis R⁵ jeweils ein H-Atom. Der Rest Z ist vorzugsweise eine Dicyanomethylen-, Alkoxycarbonylcyano-methylen-, Cyanimino- oder Alkoxycarbonyliminogruppe. Die Gruppe Y bedeutet vorzugsweise CH und die Gruppe X vorzugsweise einen 1,2-anellierten Benzolring.

Durch die Erfindung werden NLO-Materialien mit verbesserten Eigenschaften bereitgestellt. Diese Materialien weisen ein hohes Maß an NLO-Aktivität und thermischer Stabilität auf, was zur Herstellung elektrooptischer und photonischer Bauelemente ausgenutzt werden kann. Durch die Copolymeren nach der Erfindung werden somit die mit den bislang verwendeten Materialien verbundenen Probleme beseitigt, die eine geringere NLO-Aktivität und eine niedrigere Glasübergangstemperatur aufweisen, so daß der NLO-Effekt für die genannten Anwendungen nicht ausreichend ist und die anisotropen Eigenschaften einer zu schnellen Relaxation unterliegen.

Die erfindungsgemäß Verwendung findenden Di- und Polycyanate bzw. deren Prepolymere sind an sich aus der Klebstoff- und Laminiertechnik bekannt. Dabei haben sich insbesondere auch Dicyanate von perfluorierten Dihydroxyalkanen mit 4 bis 12 C-Atomen als geeignet erwiesen.

Beispiele für bevorzugt eingesetzte Cyanate sind:

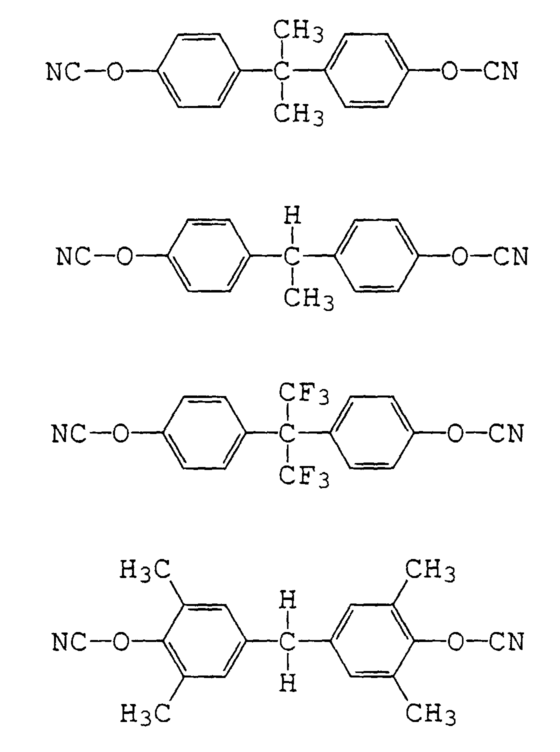

Die verwendeten Di- und Polycyanate bzw. deren Prepolymere sind entweder kommerziell verfügbar oder können vorteilhaft durch Umsetzung der entsprechenden Phenole mit Bromcyan hergestellt werden (siehe dazu: "Organic Syntheses", Vol. 61 (1983), Seiten 35 bis 38).

Die nichtlinear-optisch aktiven Verbindungen, d.h. die Chromophore, weisen einen speziellen Substituenten E auf, der zur Anbindung (des Chromophors) an die Cyanatkomponente dient. In den Copolymeren beträgt das molare Verhältnis der Cyanateinheiten zu den Chromophoreinheiten vorzugsweise 95:5 bis 50:50. Der chromophore Bestandteil der Copolymeren zeigt eine thermisch-oxidative Stabilität bis über 200°C, und die Einbettung der chromophoren Verbindung in die Polymermatrix ermöglicht überraschenderweise eine breite Variation der optischen Eigenschaften.

Bezüglich der nichtlinear-optisch aktiven Verbindungen wird auch auf die deutsche Patentanmeldung Akt.Z. 198 10 030.2 ( 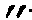 Chromophore Verbindungen und Verfahren zu ihrer Herstellung") verwiesen. Außerdem ist die Synthese der Chromophore und ihrer Vorstufen sowie die chemische Anbindung der Chromophore an die Polymermatrix - ebenso wie die Herstellung der nichtlinear-optisch aktiven Copolymeren - in den Ausführungsbeispielen beschrieben.

Die Copolymeren nach der Erfindung, d.h. die Polyaddukte, können beispielsweise durch eine thermisch initiierte oder katalytisch beschleunigte Coaddition der Di- bzw. Polycyanate- oder bevorzugt von deren Prepolymeren - mit den nicht-linear-optisch aktiven Chromophoren erhalten werden. Die Polyreaktion wird vor Erreichen des Gelpunktes abgebrochen, um noch lösliche Produkte zu erhalten. Die Molmassen dieser Produkte liegen im Bereich von 500 bis 10 000 000 g/mol, vorteilhaft im Bereich von 1000 bis 1 000 000 g/mol.

Aus den nichtlinear-optisch aktiven Copolymeren nach der Erfindung lassen sich Polymermaterialien bzw. elektrooptische und photonische Bauelemente mit stabilen nichtlinear-optischen Eigenschaften erzeugen.

Dementsprechend sind ein weiterer Gegenstand der vorliegenden Erfindung NLO-Polymermaterialien mit stabilen nichtlinearoptischen Eigenschaften, welchen ein nichtlinear-optisch aktives Copolymer der vorstehend angegebenen Art zugrunde liegt.

Zur Verbesserung der Oberflächenbeschaffenheit, der Verarbeitbarkeit und/oder der Verträglichkeit mit Polymeren können den polymeren Materialien nach der Erfindung - je nach Einsatzzweck - Verarbeitungshilfsmittel zugesetzt werden. Dies sind beispielsweise Thixotropiermittel, Verlaufmittel, Weichmacher, Netzmittel, Gleitmittel und Bindemittel.

Die NLO-Polymermaterialien nach der Erfindung werden in gelöster Form - zusammen mit vernetzungswirksamen Verbindungen - durch Aufschleudern, Tauchen, Bedrucken oder Bestreichen auf ein Substrat aufgebracht. Auf diese Weise erhält man eine nichtlinear-optische Anordnung, wobei die polymeren Materialien in elektrischen Feldern, während des langsamen Aufheizens bis zur Glasübergangstemperatur, dipolar ausgerichtet werden und unmittelbar anschließend - kinetisch kontrolliert - eine Vernetzung erfolgt. Nach dem Abkühlen werden Polymermaterialien mit ausgezeichneten nichtlinear-optischen Eigenschaften und - bedingt durch die Vernetzung - erhöhter Orientierungsstabilität und somit erhöhter Langzeitstabilität, auch bei erhöhten Gebrauchstemperaturen, erhalten. Die Polymermaterialien mit nichtlinear-optischen Eigenschaften nach der Erfindung sind aufgrund ihrer Stabilität und Modifizierbarkeit zur Erzeugung elektrooptischer und photonischer Bauelemente geeignet, die in der nichtlinearen Optik Verwendung finden.

Gegenstand der vorliegenden Erfindung sind deshalb ferner elektrooptische und photonische Bauelemente, welche wenigstens eine Funktionsschicht aus einem vernetzten Copolymer nach der Erfindung in orientierter Form umfassen.

Zur Erzeugung der Funktionsschicht wird vorzugsweise ein nichtlinear-optisches Copolymer nach der Erfindung auf ein geeignetes Trägermaterial, wie Glas, ITO-beschichtetes Glas (ITO = Indium-Zinn-Oxid) oder Siliziumwafer, beispielsweise durch sogenanntes Spin-coating oder jedes andere zur Erzeugung dünner Schichten geeignete Verfahren, aufgetragen. Die Vernetzung wird dann in geeigneter Weise bei erhöhter Temperatur, gegebenenfalls unter gleichzeitiger polarer Ausrichtung, durchgeführt. Zur genauen Vorgehensweise wird auf die Ausführungsbeispiele verwiesen.

Bei einer bevorzugten Ausführungsform der vorliegenden Erfindung ist die aus NLO-Polymermaterial erzeugte Funktionsschicht nicht unmittelbar auf das Trägermaterial aufgebracht, sondern zwischen zwei Pufferschichten angeordnet. Die Pufferschichten dienen dabei zur Abkopplung des optischen Signals von den Elektroden, um die Dämpfung so gering wie möglich zu halten. Vorzugsweise besteht wenigstens eine Pufferschicht aus einem entsprechenden vernetzten NLO-Polymermaterial, das einen geringeren Chromophorgehalt aufweist als das Polymermaterial der Funktionsschicht.

Zur Erzeugung der nichtlinear-optischen Materialien werden besonders vorteilhaft oligomere Prepolymere der Polyaddukte nach der Erfindung verwendet. Die Herstellung dieser Prepolymeren erfolgt in an sich bekannter Weise, wobei die speziell substituierten nichtlinear-optisch aktiven Chromophore mit einem Überschuß an der vernetzungswirksamen Verbindung (Di- bzw. Polycyanat) zur Reaktion gebracht werden. Nach dem Aufbringen auf ein Substrat werden die Prepolymeren - oberhalb der Glasübergangstemperatur - polar ausgerichtet und anschließend bei angelegtem elektrischen Feld zu den nichtlinear-optisch aktiven Polyaddukten (mit verbessertem Eigenschaftsprofil) vernetzt.

Anhand von Ausführungsbeispielen soll die Erfindung noch näher erläutert werden. Dabei wird zunächst die Synthese von nichtlinear-optisch aktiven Verbindungen beschrieben, dann die im Rahmen der Erfindung benutzte Synthese der Cyanatharze und die Einbringung der nichtlinear-optisch aktiven Chromophore in die Copolymeren und schließlich die Synthese der nichtlinear-optisch aktiven Polymermaterialien.

In den Beispielen werden folgende Abkürzungen verwendet:
- Fp. = Fusionspunkt (Schmelzpunkt);
- Kp. = Kochpunkt (Siedepunkt);
- Zers. = Zersetzung.

### Beispiel 1

a) 0,1 mol m-Aminophenol werden in 150 ml Methanol mit 0,11 mol n-Butylbromid und 0,1 mol NaHCO₃ versetzt und 5 h unter Rückfluß erhitzt. Nach dem Abkühlen wird filtriert und das Lösemittel im Vakuum entfernt. Das zurückbleibende Öl wird im Vakuum fraktioniert; man erhält 3-(n-Butyl-amino)-phenol.
   Ausbeute 57 %; Kp. 110°C (6·10⁻⁵ Torr); Fp. 35°C.
b) 0,1 mol 3-(n-Butyl-amino)-phenol werden in 100 ml Methanol mit 0,11 mol 2-Bromethanol und 0,1 mol NaHCO₃ 10 h unter Rückfluß erhitzt. Nach dem Abkühlen wird filtriert, das Lösemittel im Vakuum entfernt und der Rückstand fraktioniert; man erhält 3-[N-(n-Butyl)-N-(2-hydroxyethyl)-amino]-phenol.
   Ausbeute 54 %; Kp. 130-140°C (5·10⁻⁵ Torr); Fp. 45-47°C.
c) 0,05 mol der Verbindung nach b) werden in 50 ml HCl-gesättigtem Propanol gelöst und mit 0,1 mol Isoamylnitrit versetzt. Nach 20 min wird mit 150 ml Diethylether versetzt und das gebildete Produkt abgesaugt; man erhält 2-Nitroso-5-[N-(n-butyl)-N-(2-hydroxyethyl)-amino]-phenol-hydrochlorid.
   Ausbeute 76 %; Fp. 127°C (Zers.).
d) 0,01 mol der Verbindung nach c) werden mit 0,011 mol 1-Naphthyl-malonitril und 0,02 mol Triethylamin in 15 ml Dimethylformamid kurzzeitig zum Sieden erhitzt. Nach dem Abkühlen wird mit Wasser versetzt und das ausfallende Produkt mit Dichlorethan extrahiert. Nach dem Abdestillieren des Lösemittels wird der Rückstand mehrmals durch Chromatographie an Kieselgel unter Verwendung von Essigsäureethylester als Laufmittel gereinigt; man erhält Benzo[a]-5-dicyanomethylen-9-[N-(n-butyl)-N-(2-hydroxyethyl)-amino]-7,12-phenoxazin, eine Verbindung folgender Struktur: 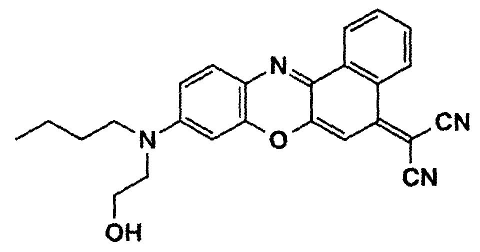
   Ausbeute 30 %; Fp. 190°C; λₘₐₓ 618 nm (in Toluol).
e) 0,01 mol der Verbindung nach d) und 0,015 mol 4-Hydroxybenzoesäure werden - unter inerter Atmosphäre - in 100 ml wasserfreiem N-Methylpyrrolidon unter Rühren gelöst. Nach der vollständigen Auflösung der Edukte werden 0,02 mol Carbonyldiimidazol portionsweise zugegeben und anschließend wird das Gemisch 6 h auf 70°C erwärmt. Danach wird die Lösung des Reaktionsproduktes mit Wasser verdünnt und mittels Methylenchlorid extrahiert. Die Methylenchlorid-phase wird getrocknet und dann wird das Methylenchlorid durch Verdampfen abgetrennt. Das Rohprodukt wird aus Essigsäureethylester umkristallisiert; man erhält den 4-Hydroxybenzoesäureester von Benzo[a]-5-dicyanomethylen-9-[N-(n-butyl)-N-(2-hydroxyethyl)-amino)-7,12-phenoxazin.
   Ausbeute 85 %; Fp. 124°C.

### Beispiel 2

a) 0,1 mol m-Aminophenol werden in 150 ml Methanol mit 0,11 mol n-Heptyl-bromid und 0,1 mol NaHCO₃ versetzt und 5 h unter Rückfluß erhitzt. Nach dem Abkühlen wird filtriert und das Lösemittel im Vakuum entfernt. Das zurückbleibende Öl wird im Vakuum fraktioniert; man erhält 3-(n-Heptyl-amino)-phenol.
   Ausbeute 62 %; Kp. 130-140°C (8·10⁻⁵ Torr); Fp. 27-30°C.
b) 0,1 mol 3-(n-Heptyl-amino)-phenol werden in 100 ml Methanol mit 0,11 mol 2-Bromethanol und 0,1 mol NaHCO₃ 10 h unter Rückfluß erhitzt. Nach dem Abkühlen wird fil-triert, das Lösemittel im Vakuum entfernt und der Rückstand fraktioniert; man erhält 3-[N-(n-Heptyl)-N-(2-hydroxyethyl)-amino]-phenol.
   Ausbeute 54 %; Kp. 160-170°C (1·10⁻⁵ Torr); Fp. 45-47°C.
c) 0,05 mol der Verbindung nach b) werden in 50 ml HCl-gesättigtem Propanol gelöst und mit 0,1 mol Isoamylnitrit versetzt. Nach 20 min wird mit 150 ml Diethylether versetzt und das gebildete Produkt abgesaugt; man erhält 2-Nitroso-5-[N-(n-heptyl)-N-(2-hydroxyethyl)-amino]-phenol-hydrochlorid.
   Ausbeute 62 %; Fp. 129°C (Zers.).
d) 0,01 mol der Verbindung nach c) werden mit 0,011 mol 1-Naphthyl-malonitril und 0,02 mol Triethylamin in 15 ml Dimethylformamid kurzzeitig zum Sieden erhitzt. Nach dem Abkühlen wird mit Wasser versetzt und das ausfallende Produkt mit Dichlorethan extrahiert. Nach dem Abdestillieren des Lösemittels wird der Rückstand mehrmals durch Chromatographie an Kieselgel unter Verwendung von Essigsäureethylester als Laufmittel gereinigt; man erhält Benzo[a]-5-dicyanomethylen-9-[N-(n-heptyl)-N-(2-hydroxyethyl)-amino]-7,12-phenoxazin, eine Verbindung folgender Struktur: 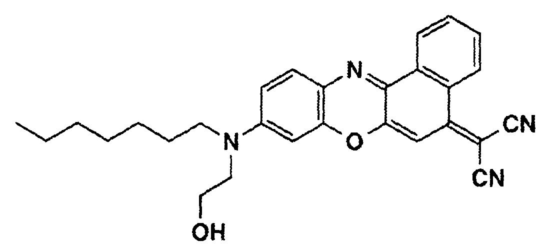
   Ausbeute 28 %; Fp. 155-157°C; λₘₐₓ 622 nm (in Toluol).
e) 0,01 mol der Verbindung nach d) und 0,015 mol 4-Hydroxybenzoesäure werden - unter inerter Atmosphäre - in 100 ml wasserfreiem N-Methylpyrrolidon unter Rühren gelöst. Nach der vollständigen Auflösung der Edukte werden 0,02 mol Carbonyldiimidazol portionsweise zugegeben und anschließend wird das Gemisch 6 h auf 70°C erwärmt. Danach wird die Lösung des Reaktionsproduktes mit Wasser verdünnt und mittels Methylenchlorid extrahiert. Die Methylenchlorid-phase wird getrocknet und dann wird das Methylenchlorid durch Verdampfen abgetrennt. Das Rohprodukt wird aus Essigsäureethylester umkristallisiert; man erhält den 4-Hydroxybenzoesäureester von Benzo[a]-5-dicyanomethylen-9-[N-(n-heptyl)-N-(2-hydroxyethyl)-amino]-7,12-phenoxazin.
   Ausbeute 80%; Fp. 120°C.

### Beispiel 3

Entsprechend Beispiel 1 wird 2-Dicyanomethylen-6-[N-(n-butyl)-N-(2-hydroxyethyl)-amino]-thieno-[3,2-b]benzo[e]-oxazin, eine Verbindung folgender Struktur, hergestellt:

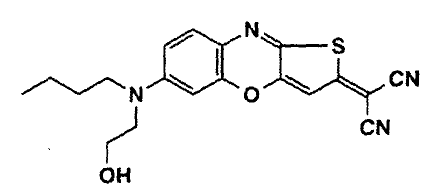

Dazu werden 0,01 mol 2-Nitroso-5-[N-(n-butyl)-N-(2-hydroxyethyl)-amino]-phenol-hydrochlorid (siehe Beispiel 1c) mit 0,01 mol 2-Thienylmalonitril, das durch Reaktion von 0,13 mol Malonitril in 100 ml absolutem Tetrahydrofuran mit 0,15 mol Natriumhydrid, 0,0015 mol [(C₆H₅)₃P]₂PdCl₂ und 25 g 2-Iodthiophen durch 3-stündiges Kochen unter Rückfluß und anschließende Neutralisation mit Salzsäure in einer Ausbeute von 45 % hergestellt wurde, in 15 ml Dimethylformamid, welchem 0,02 mol Triethylamin zugesetzt wurden, einige Minuten unter Rückfluß erhitzt. Die erhaltene Lösung wird - nach dem Abkühlen - mit Wasser verdünnt und der dabei ausgefällte Farbstoff durch Absaugen isoliert. Die Reinigung erfolgt durch mehrmalige Säulenchromatographie an Kieselgel mit Essigsäureethylester als Laufmittel.
Ausbeute 23 %; Fp. 260°C.

0,01 mol der in dieser Weise hergestellten Verbindung und 0,015 mol 4-Hydroxybenzoesäure werden - unter inerter Atmosphäre - in 100 ml wasserfreiem N-Methylpyrrolidon unter Rühren gelöst. Nach der vollständigen Auflösung der Edukte werden 0,02 mol Carbonyldiimidazol portionsweise zugegeben und anschließend wird das Gemisch 6 h auf 70°C erwärmt. Danach wird die Lösung des Reaktionsproduktes mit Wasser verdünnt und mittels Methylenchlorid extrahiert. Die Methylenchloridphase wird getrocknet und dann wird das Methylenchlorid durch Verdampfen abgetrennt. Das Rohprodukt wird aus Essigsäureethylester umkristallisiert; man erhält den 4-Hydroxybenzoesäureester von 2-Dicyanomethylen-6-[N-(n-butyl)-N-(2-hydroxyethyl)-amino]-thieno-[3,2-b]benzo[e]-oxazin.
Ausbeute 83 %; Fp. 133°C.

### Beispiel 4

Entsprechend Beispiel 2 wird - aus 2-Nitroso-5-[N-(n-heptyl)-N-(2-hydroxyethyl)-amino]-phenol-hydrochlorid (siehe Beispiel 2c) und 1,8-Naphthosultam - 9-[N-(n-Heptyl)-N-(2-hydroxyethyl)-amino]-benzo[d]isothiazolo-[3,3a,4-ab]-phen-7,12-oxazin-4-dioxid, ein Phenoxazinfarbstoff folgender Struktur, hergestellt: 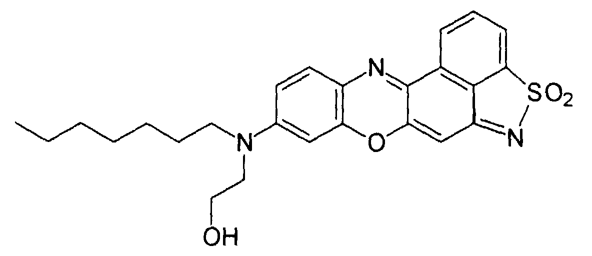
Ausbeute 35 %; Fp. 178-180°C.

Der Phenoxazinfarbstoff wird entsprechend Beispiel 1e in den 4-Hydroxybenzoesäureester übergeführt.
Ausbeute 83 %; Fp. 147°C.

### Beispiel 5

In einer Schmelze von 2,736 g des Dicyanats von Bisphenol A (siehe Formel (2): R¹ bis R⁴ = H, M = Isopropyl) werden unter Rühren 2,264 g des nichtlinear-optischen Chromophors nach Beispiel 1 aufgelöst. Dabei bildet sich eine homogene Schmelze, die bei 130°C prepolymerisiert wird. Die Polyaddition wird nach 25 min durch Abschrecken unterbrochen, wobei ein in gebräuchlichen Lacklösemitteln lösliches Polyaddukt in quantitativer Ausbeute erhalten wird. Dieses Polyaddukt wird aus einer Lösung zu nichtlinear-optischen Polymerfilmen verarbeitet.

### Beispiel 6

In einer Schmelze von 3,658 g des Dicyanats von Bisphenol A (siehe Formel (2): R¹ bis R⁴ = H, M = Isopropyl) werden unter Rühren 3,342 g des nichtlinear-optischen Chromophors nach Beispiel 2 aufgelöst. Dabei bildet sich eine homogene Schmelze, die bei 130°C prepolymerisiert wird. Die Polyaddition wird nach 35 min durch Abschrecken unterbrochen, wobei ein in gebräuchlichen Lacklösemitteln lösliches Polyaddukt in quantitativer Ausbeute erhalten wird. Dieses Polyaddukt wird aus einer Lösung zu nichtlinear-optischen Polymerfilmen verarbeitet.

### Beispiel 7

Entsprechend Beispiel 6 wird aus 6,89 g des Dicyanats von Bisphenol A und 3,11 g des nichtlinear-optischen Chromophors nach Beispiel 2 ein Polyaddukt hergestellt und zu Polymerfilmen verarbeitet.

### Beispiel 8

Entsprechend Beispiel 6 wird aus 3,41 g des Dicyanats von Bisphenol A und 0,57 g des nichtlinear-optischen Chromophors nach Beispiel 2 ein Polyaddukt hergestellt und zu Polymerfilmen verarbeitet.

### Beispiel 9

Zur Vernetzung werden die Polymeren, d.h. die Polyaddukte aus Cyanatharz und funktionalisierter nichtlinear-optisch aktiver Verbindung, durch Spin-coating aus einer Lösung auf geeignete Trägermaterialien, wie Glas, ITO-beschichtetes Glas (ITO = Indium-Zinn-Oxid) oder Si-Wafer, aufgebracht, 30 min - beispielsweise bei 100°C - bis zur Filmstabilität getempert und anschließend in einer Inertgasatmosphäre bei erhöhter Temperatur ausgehärtet, gegebenenfalls unter Zugabe geeigneter Katalysatoren, wie Acetylacetonat und 1,4-Diazabicyclo[2.2.2]-octan. Die Reaktionsbedingungen und die erhaltenen Ergebnisse sind in der nachfolgenden Tabelle zusammengefaßt.

| Polymer aus Beispiel | Härtungstemperatur/Zeit | Chromophoranteil Masse-% |
|---|---|---|
| 5 | 140°C/1 h | 45,3 |
| | 160°C/1 h | |
| 6 | 140°C/1 h | 47,7 |
| | 180°C/1 h | |
| 7 | 140°C/1 h | 31,1 |
| | 180°C/1 h | |
| 8 | 140°C/1 h | 14,6 |
| | 180°C/1 h | |
| | 200°C/30 min | |

### Beispiel 10

Für die elektrooptischen Untersuchungen werden die Polyaddukte nach der Erfindung oder entsprechende Prepolymere, gegebenenfalls zusammen mit vernetzungswirksamen Verbindungen, in einem geeignetem Lösemittel durch Spin-coating auf ITO-beschichtetes Glas aufgebracht; die Schichtdicke der in dieser Weise hergestellten Filme beträgt üblicherweise 3 bis 6 µm. Für das elektrische Polen, zur Erzielung einer hohen nicht-zentrosymmetrischen Orientierung, wird auf den Film (aus dem Polyaddukt) eine Goldelektrode aufgesputtert; die Gegenelektrode ist dabei die lichtdurchlässige ITO-Schicht. Nach dem Erwärmen der Probe bis in den Glasübergangstemperaturbereich wird eine Gleichspannung angelegt, wobei die erforderliche Spannungserhöhung auf das Orientierungsverhalten der nichtlinear-optischen Moleküleinheiten abgestimmt wird, um elektrische Durchschläge und somit eine Zerstörung des Films zu vermeiden. Nach Erreichen einer Polungsfeldstärke von 50 bis 100 V/µm genügt eine Polungsdauer von 15 min zur Orientierung der nichtlinear-optischen Moleküleinheiten. Anschließend wird die Probe vernetzt, und zwar thermisch, und dann wird die Probe - mit konstant anliegendem Feld - bis auf Raumtemperatur abgekühlt, womit die Orientierung fixiert wird.

Die elektrooptische Untersuchung der Polymerproben erfolgt durch interferometrische Messung eines schräg eingestrahlten Laserstrahls nach Einfachreflexion an der Goldelektrode. Der dazu erforderliche Meßaufbau und die Meßauswertung sind bekannt (siehe beispielsweise: "Appl. Phys. Lett.", Vol. 56 (1990), Seiten 1734 bis 1736).

### Beispiel 11

Für die Herstellung elektrooptischer Bauelemente, beispielsweise eines elektrooptischen Phasenmodulators (siehe R.C. Alferness 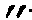 Titanium-Diffused Lithium Niobate Waveguide Devices" in T. Tamir 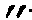 Guided-Wave Optoelectronics", Springer-Verlag Berlin Heidelberg New York, 1988, Seite 155) werden die nichtlinear-optischen Polymeren entsprechend den Beispielen 5 bis 7 eingesetzt. Auf ein geeignetes Substrat, beispielsweise ein Si-Wafer, wird eine metallische Elektrode aufgebracht oder das Substrat wird - bei geeigneter elektrischer Leitfähigkeit - selbst als Elektrode benutzt. Auf das Substrat werden nacheinander zwei Schichten des Polyadduktes aufgebracht, beispielsweise durch Spin-coating. Die erste Schicht besteht aus einem Polyaddukt entsprechend Beispiel 8 mit einem Chromophoranteil von 14,6 Masse-%, die zweite Schicht aus einem Polyaddukt nach einem der Beispiele 5 bis 7 mit einem Chromophoranteil von 31,1 bzw. 45,3 bzw. 47,7 Masse-%. Die erste Schicht wird entsprechend Beispiel 9 gehärtet, dann wird die zweite Schicht aufgebracht und 30 min bei 100°C bis zur Filmstabilität getempert. Die Zusammensetzung der beiden Schichten ist geringfügig unterschiedlich, so daß zwischen den beiden Schichten ein geringer Brechungsindexunterschied von beispielsweise 0,01 bis 0,02 besteht; der Chromophorgehalt der beiden Schichten kann aber nahezu auch gleich sein. Die Dicke der beiden Schichten liegt jeweils bei 2 bis 4 µm. In der zweiten Schicht wird durch bekannte Methoden des Photobleichens und Anwendung einer geeigneten Photomaske ein Streifenwellenleiter in einer Breite von 4 bis 7 µm erzeugt. Auf die zweite Schicht wird dann, lagemäßig über der Wellenleiterstruktur, eine Elektrode für die Polung der Chromophore aufgebracht; gegebenenfalls kann hierfür die metallische Photomaske für die Wellenleiterstrukturierung genutzt werden. Zur Polung und zur Aushärtung der zweiten Polymerschicht wird ein elektrisches Feld angelegt, im allgemeinen mit einer Feldstärke von 100 V/µm, und dann wird der Aushärtezyklus entsprechend Beispiel 9 durchgeführt. Nach dem Entfernen der metallischen Elektrode (und gegebenenfalls der Photomaske) wird eine obere Deckschicht, deren Zusammensetzung und Schichtstärke der ersten aufgebrachten Schicht entspricht, aufgebracht und gehärtet. Auf diese obere Deckschicht wird dann, lagemäßig über dem Streifenwellenleiter, eine weitere metallische Elektrode als Streifenelektrode aufgebracht. Durch Sägen des Substrats mit den aufgebrachten Polymerschichten können Stirnflächen für die Lichteinkopplung und - auskopplung erzeugt werden. In einem Bauelement der genannten Art kann auf diese Weise im Streifenwellenleiter ein elektrooptischer Koeffizient von ca. 30 bis 50 pm/V erzielt werden.

Die erfindungsgemäßen vernetzten Polymermaterialien zeigen nach der Polarisierung eine hohe Orientierungsstabilität bis 180°C. Die darin enthaltenen Chromophore weisen eine ausgezeichnete Temperaturstabilität auf, so daß die Materialien zur Herstellung technisch verwertbarer, langzeitstabiler elektrooptischer und photonischer Bauteile geeignet sind.

## Patentansprüche

1. Nichtlinear-optisch aktive Copolymere, **dadurch gekennzeichnet,** daß sie ein Polyaddukt sind aus
(a) mindestens einem organischen Di- oder Polycyanat folgender Struktur: 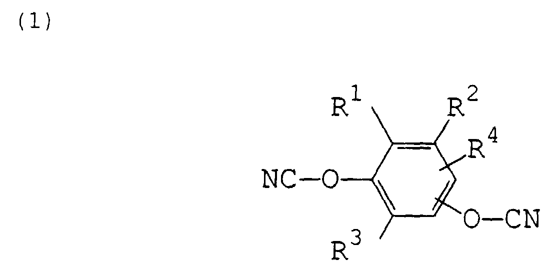 wobei folgendes gilt:
R¹, R², R³ , R⁴ = H, Halogen, C₁- bis C₁₀-Alkyl, C₃- bis C₆-Cycloalkyl, C₁- bis C₁₀-Alkoxy oder Phenyl, wobei die Alkyl- und Phenylgruppen ganz oder teilweise fluoriert sein können; 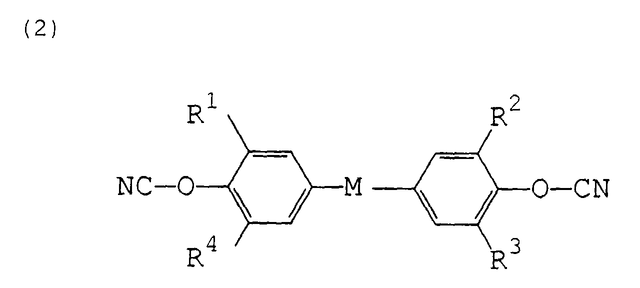
wobei folgendes gilt:
M ist eine chemische Bindung, O, S, SO₂, CF₂, CH₂, CH(CH₃), Isopropyl, Hexafluorisopropyl, N=N, CH=CH, COO, CH=N, CH=N-N=CH, Alkylenoxyalkylen mit einem C₁- bis C₈-Alkylenrest oder ein Rest der Struktur 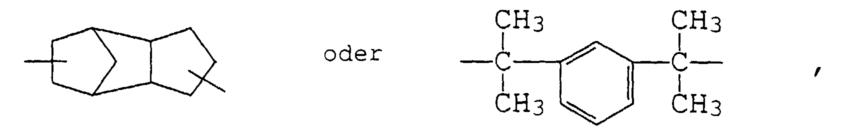
R¹, R² , R³ und R⁴ besitzen die vorstehend angegebene Bedeutung; 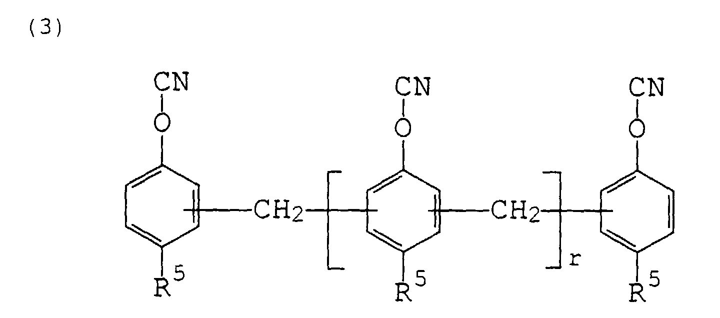 wobei folgendes gilt:
r = 0 bis 20,
R⁵ = H oder C₁- bis C₅-Alkyl,
und
(b) einer nichtlinear-optisch aktiven Verbindung folgender Struktur: 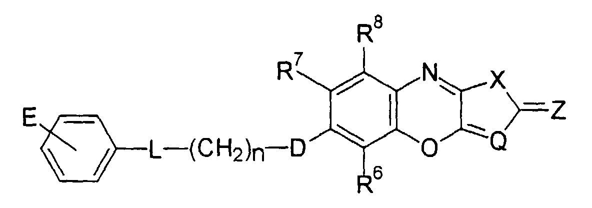 wobei folgendes gilt:
n = 2 bis 6,
R⁶, R⁷ und R⁸ sind jeweils ein H-Atom, ein linearer oder verzweigter C₁- bis C₂₀-Alkylrest, welcher gegebenenfalls durch 1 bis 5 Sauerstoffatome in Etherfunktion unterbrochen ist, oder ein Phenyl-, Naphthyl-, Thienyl-, Thiazolyl- oder Pyridylrest,
D = O, S oder NR⁹, wobei R⁹ ein H-Atom, ein linearer oder verzweigter C₁- bis C₂₀-Alkylrest, welcher gegebenenfalls durch 1 bis 5 Sauerstoffatome in Etherfunktion unterbrochen ist, ein Benzylrest oder ein Phenyl- oder Naphthylrest ist,
L = O, COO oder OCO,
E = OH, NH₂, OCN oder ein Rest der Struktur 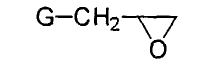 mit G = O, OCO oder NR¹⁰, wobei R¹⁰ ein H-Atom oder ein linearer C₁- bis C₆-Alkylrest ist,
Z ist eine Elektronenakzeptor-substituierte Methylen- oder Iminogruppe,
X steht für S, O, NR¹¹ oder eine Ringdoppelbindung oder für 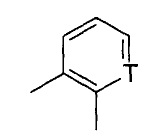 wobei R¹¹ ein H-Atom, ein linearer oder verzweigter C₁- bis C₂₀-Alkylrest oder ein Phenyl- oder Naphthylrest ist und für T CH oder N steht oder gegebenenfalls Z und T zusammen eine Struktur vom Typ =N-SO₂-C≡, =N-CS-C≡ oder =N-CO-C≡ bilden, und
Q ist eine CH- oder CR¹²-Gruppe oder N, wobei R¹² ein linearer oder verzweigter C₁- bis C₂₀-Alkylrest oder ein Phenyl- oder Naphthylrest ist.

2. Copolymere nach Anspruch 1, **dadurch gekennzeichnet,** daß das molare Verhältnis der Cyanateinheiten zu den nichtlinear-optisch aktiven Einheiten 95:5 bis 50:50 beträgt.

3. Copolymere nach Anspruch 1 oder 2**, dadurch gekennzeichnet**, daß R¹ bis R⁵ ein Wasserstoffatom bedeuten.

4. Copolymere nach einem der Ansprüche 1 bis 3, **dadurch gekennzeichnet**, daß der Rest Z eine Dicyanomethylen-, Alkoxycarbonylcyanomethylen-, Cyanimino- oder Alkoxycarbonyliminogruppe ist.

5. Copolymere nach einem oder mehreren der Ansprüche 1 bis 4, **dadurch gekennzeichnet**, daß X ein 1,2-anellierter Benzolring ist.

6. Copolymere nach einem oder mehreren der Ansprüche 1 bis 5, **dadurch gekennzeichnet**, daß Y eine CH-Gruppe ist.

7. Elektrooptische und photonische Bauelemente, **dadurch gekennzeichnet**, daß sie wenigstens eine Funktionsschicht aus einem vernetztem Copolymer nach einem oder mehreren der Ansprüche 1 bis 6 in orientierter Form enthalten.

8. Elektrooptische und photonische Bauelemente nach Anspruch 7, **dadurch gekennzeichnet**, daß die Funktionsschicht zwischen zwei Pufferschichten angeordnet ist.

9. Elektrooptische und photonische Bauelemente nach Anspruch 8, **dadurch gekennzeichnet**, daß wenigstens eine der Pufferschichten aus einem entsprechenden vernetzten Copolymer wie die Funktionsschicht besteht, wobei der Chromophorgehalt des Copolymers der Pufferschicht kleiner ist als der Chromophorgehalt des Copolymers der Funktionsschicht.
